# EUROPÄISCHE PATENTSCHRIFT

(11) **EP 1 350 580 B1**
(45) Veröffentlichungstag und Bekanntmachung des Hinweises auf die Patenterteilung: **14.01.2009**
(21) Anmeldenummer: 03007175.7
(22) Anmeldetag: 28.03.2003
(51) Int. Cl.: B21D 53/88, B21D 53/00, B60B 35/04, B60B 35/02, B21D 5/08

(54) **Verfahren zum Herstellen einer im Querschnitt im Wesentlichen U-förmigen Farhzeugachse**
Method for making a vehicle axle with an essentially U-shaped cross section
Procédé de fabrication d'un essieu de véhicule à section essentiellement en U

(30) Priorität: 05.04.2002 DE 10215098
(43) Veröffentlichungstag der Anmeldung: 08.10.2003
(73) Patentinhaber: Welser Profile AG, 3341 Ybbsitz (AT)
(72) Erfinder: Welser, Wolfgang, 3341 Ybbsitz (AT)
(74) Vertreter: Grünecker, Kinkeldey, Stockmair & Schwanhäusser Anwaltssozietät

(56) Entgegenhaltungen:
- EP-A- 0 992 375
- EP-A- 1 036 678
- EP-A- 1 081 237
- EP-A- 1 125 774
- WO-A-00/53443
- US-A- 2 069 911
- US-A- 6 145 271

## Beschreibung

Die Erfindung betrifft ein Verfahren zum Herstellen einer im Querschnitt im Wesentlichen U-förmigen Fahrzeugachse und eine nach diesem Verfahren hergestellte Fahrzeugachse.

Derartige Fahrzeugachsen werden vielfach als Starrachsen, sowohl im PKW- als auch im LKW-Bereich eingesetzt. Im Gegensatz zur Moderne und Konstruktionen ist die Herstellung dieser Starrachsen verhältnismäßig einfach, da Profilmaterial einfach auf die entsprechende Länge abgelängt werden kann. Neben der Robustheit dieses Fahrzeugkonzeptes ist dies einer der Gründe, warum die Starrachse bei einfacheren Fahrzeugkonzepten, beispielsweise Geländewagen nach wie vor dominiert. Nachteilig hingegen ist, dass die Starrachse ein relativ hohes Gewicht aufweist und damit die ungefederten Massen am Fahrzeug erhöht. Dadurch wird der Fahrkomfort des Fahrzeuges beeinträchtigt. Es gibt zwar Verfahren zum Herstellen von Hohlprofilen im PKW-Bereich, indem aus einem rohrförmigen Ausgangsmaterial durch hydraulischen Innendruck Träger weitgehend beliebiger Gestaltungen geformt werden können; diese Verfahren sind jedoch entsprechend aufwendig und rentieren sich nur bei hohen Stückzahlen.

Aufgabe der vorliegenden Erfindung ist es daher, ein Verfahren zum Herstellen einer Eingangs genannten Fahrzeugachse zur Verfügung zu stellen, dass einfach ist, die bisherigen Vorteile der Fahrzeugachse beibehält und den Nachteil des hohen Gewichtes vermeidet.

EP 10 366 78 offenbart ein Verfahren zum Herstellen einer im Querschnitt im Wesentlichen U-förmigen Fahrzeugachse durch Walzen eines flachen Metallbandes.

Diese Aufgabe wird erfindungsgemäß dadurch gelöst, dass das Metallband zunächst im mittleren Bereich zur Bildung eines inneren U-Profils U-förmig gewalzt wird, wobei an den freien Enden der U-Schenkel seitliche Flügel stehen bleiben, deren Länge größer ist als die halbe Abwicklung des inneren U-Profils, wonach dann die Flügel im Weiteren Walzvorgang unter Bildung eines Hohlraumes zum inneren U-Profil zu einem äußeren U-Profil gefaltet und an ihren Stoßkanten miteinander verschweißt werden.

Auf diese Weise wird ein Hohlprofil gebildet, welches einerseits sehr einfach herzustellen ist, andererseits den Vorteil beibehält, dass es als einfaches Stangenmaterial auf die gewünschte Achslänge abgelängt werden kann, und schließlich wird eine Fahrzeugachse erreicht, die nicht nur erheblich leichter als herkömmliche Fahrzeugachsen ist, sondern darüber hinaus auch ein höheres Widerstandsmoment aufweist.

Vorteilhafterweise werden die Flügel im Bereich ihrer Stoßkanten mittels eines Hochfrequenzverfahrens verschweißt. Die Schweißnaht kann im Anschluss daran in üblicher Weise gehobelt werden, so dass an der Außenseite ein sollständiges glattes Profil entsteht.

Bezüglich der Fahrzeugachse wird die Aufgabe dadurch gelöst, dass das innere und das äußere U-Profil im Wesentlichen durch zwei Kreisbogensegmente unterschiedlichen Durchmessers und versetzten Mittelpunktes gebildet werden, wobei die freien Enden der Kreisbogensegmente im Wesentlichen asymptotisch aufeinander zu laufen. Im Wesentlichen asymptotisch ist hierbei so zu verstehen, dass die beiden freien Enden noch über Biegeradius miteinander verbunden und somit die inneren Flächen auf geringfügigem Abstand gehalten sind.

Vorteilhafterweise ist der Abstand zwischen dem inneren und dem äußeren U-Profil im Scheitelpunkt des Achsenquerschnitts so gewählt, dass er ein Vielfaches der Wandstärke des Metallbandes beträgt.

Im Folgenden wird ein Ausführungsbeispiel der Erfindung anhand einer Zeichnung näher erläutert. Es zeigen:
- Fig. 1 a-d: die verschiedenen Schritte zum Herstellen der Fahrzeugachse ausgehend von einem Metallband, und
- Fig. 2: eine Querschnittsansicht durch ein fertiges Fahrzeugachsenprofil.

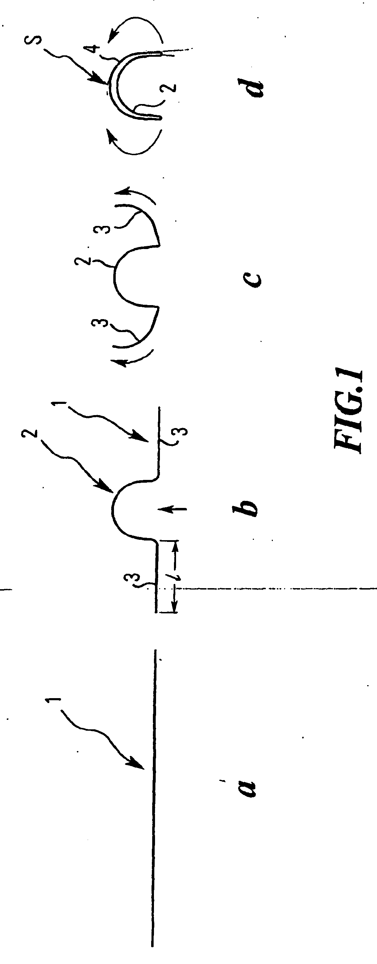

Das Fahrzeugachsenprofil wird im vorliegenden Beispiel durch sogenanntes Rollformen bzw. Kaltwalzen hergestellt. Dieses Verfahren beinhaltet eine Vorrichtung, bei der hintereinander verschiedene Rollensätze angeordnet sind, die verschiedene Umformungsschritte an einem kontinuierlich durchlaufenden Metallband 1 ausführen. Der Übersichtlichkeit halber sind diese Rollensätze in Fig. 1 nicht dargestellt. Die Ausformung der Rollensätze ergibt sich jedoch aus der in Fig. 1 schrittweise dargestellten Verformung des Metallbandes 1.

Ausgehend von dem noch unverformten Metallband 1 in Schritt a läuft das Metallband 1 über einen ersten Rollensatz, der im mittleren Bereich des Metallbandes A ein inneres U-Profil 2 formt, und zwar unter Beibehaltung seitlich abstehender Flügel 3. Die Länge I der Flügel 3 ist dabei so gewählt, dass sie größer ist, als die halbe Abwicklung des inneren U-Profils 2. Im nächsten Verfahrensschritt c werden die Flügel 3 an den Enden nach oben gebogen, so dass jeweils ein halbes U-Profil gebildet wird. Im letzten Verfahrensschritt d werden dann die seitlichen Flügel 3 um die unteren freien Enden der U-Schenkel nach oben gebogen, bis sich die Stoßkanten im Scheitelpunkt S berühren. Die Stoßkanten werden im Scheitelpunkt durch Ultraschallverschweißung miteinander verbunden. Im Anschluss daran wird die Schweißnaht in üblicher Weise gehobelt.

Auf diese Art und Weise entsteht durch die Flügel 3 ein äußeres U-Profil 4, welches um das innere U-Profil 2 herum angeordnet ist. Beide U-Profile weisen Kreisbogensegmente unterschiedlichen Durchmessers auf, wobei die Mittelpunkte der Kreisbogensegmente gegeneinander versetzt sind, so dass die beiden Profile ineinander geschachtelt sind und die freien Enden der U-Schenkel 5 asymptotisch aufeinander zu laufen.

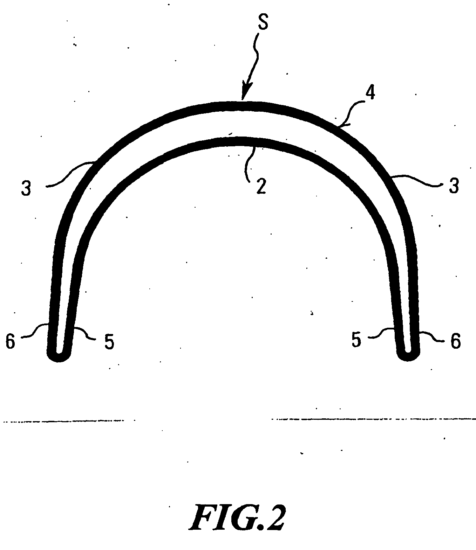

Aus Fig. 2 ist gut zu erkennen, dass der Abstand der beiden U-Profile 2 und 4 im Scheitelpunkt S ein Vielfaches der Wandstärke des Metallbandes beträgt.

Trotz erheblicher Materialersparnis und Gewichtseinsparung weist das auf diese Art und Weise hergestellte Profil erheblich höhere Widerstandsmomente auf als ein vergleichbares herkömmliches Fahrzeugachsprofil.

## Patentansprüche

1. Verfahren zum Herstellen einer im Querschnitt im Wesentlichen U-förmigen Fahrzeugachse durch Walzen eines flachen Metallbandes (1), **dadurch gekennzeichnet, dass** das Metallband (1) zunächst im mittleren Bereich zur Bildung eines inneren U-Profils (2) U-förmig gewalzt wird, wobei an den freien Enden der U-Schenkel (5) seitlich Flügel (3) stehen bleiben, deren Länge I größer ist als die halbe Abwicklung des inneren U-Profils (2), wonach dann die Flügel in einem weiteren Walzvorgang unter Bildung eines Hohlraumes zum inneren U-Profil (2) zu einem äußeren U-Profil gefaltet und an ihren Stoßkanten miteinander verschweißt werden.

2. Verfahren nach Anspruch 1, **dadurch gekennzeichnet, dass** die Stoßkanten durch Hochfrequenzschweißen miteinander verbunden werden.

3. Verfahren nach Anspruch 1 oder 2, **dadurch gekennzeichnet, dass** die Schweißnaht anschließend gehobelt wird.

4. Fahrzeugachse, aus einem flachen Metallband hergestellt nach dem Verfahren nach einem der Ansprüche 1 bis 3, wobei das innere und das äußere U-Profil (2, 4) im Wesentlichen durch zwei Kreisbogensegmente unterschiedlichen Durchmessers gebildet werden, **dadurch gekennzeichnet dass** ihre Mittel punkte versetzt sind und wobei die freien Enden (5 bzw. 6) im Wesentlichen asymptotisch aufeinander zu laufen.

5. Fahrzeugachse nach dem Anspruch 4, **dadurch gekennzeichnet, dass** der Abstand zwischen dem inneren und dem äußeren U-Profil (2, 3) im Scheitelpunkt (S) des Achsenquerschnitts ein Vielfaches der Wandstärke des Metallbandes (1) beträgt.

## Claims

1. Method of producing a vehicle axle, which is substantially U-shaped in cross-section, by rolling a flat metal strip (1), **characterised in that** the metal strip (1) is rolled into a U-shape initially in the central region to form an internal U-shaped profile (2), wherein laterally wings (3) remain on the free ends of the U-shaped limbs (5) and their length I is greater than half an unwinding of the internal U-shaped profile (2), after which during a subsequent rolling procedure the wings are then folded to form an external U-shaped profile with the formation of a hollow space with respect to the internal U-shaped profile (2) and are welded together at their abutting edges.

2. Method as claimed in claim 1, **characterised in that** the abutting edges are connected to each other by means of high frequency welding.

3. Method as claimed in claim 1 or 2, **characterised in that** the welding seam is subsequently planed.

4. Vehicle axle produced from a flat metal strip according to the method as claimed in any one of claims 1 to 3, wherein the internal and external U-shaped profiles (2, 4) are formed substantially by means of two circular arc segments which have a different diameter, **characterised in that** their centre points are offset and wherein the free ends (5, 6) run towards each other substantially asymptotically.

5. Vehicle axle as claimed in claim 4, **characterised in that** the spaced interval between the internal and the external profiles (2, 3) at the apex (S) of the axle cross-section is a multiple of the wall thickness of the metal strip (1).

## Revendications

1. Procédé de fabrication d'un essieu de véhicule de section transversale sensiblement en forme de U par laminage d'une bande métallique plate (1), **caractérisé en ce que** la bande métallique (1) est d'abord laminée en forme de U dans la zone centrale pour former un profilé interne en U (2), dans lequel, aux extrémités libres des branches en U (5), des ailes (3) restent stationnaires latéralement, la longueur I de celles-ci étant supérieure au demi-développement du profilé interne en U (2), après quoi les ailes sont pliées, dans une autre opération de laminage, en formant un espace creux pour passer d'un profilé en U interne (2) à un profilé en U externe et sont soudées l'une à l'autre sur leurs rebords.

2. Procédé selon la revendication 1, **caractérisé en ce que** les rebords sont reliés l'un à l'autre par des soudures à haute fréquence.

3. Procédé selon la revendication 1 ou 2, **caractérisé en ce que** le cordon de soudage est ensuite raboté.

4. Essieu de véhicule fabriqué dans une bande métallique plate selon le procédé de l'une quelconque des revendications 1 à 3, dans lequel le profil en U interne et le profil en U externe (2, 4) sont sensiblement formés de deux segments en arc de cercle de différents diamètres, **caractérisé en ce que** leurs centres sont décalés et dans lequel les extrémités libres (5 ou 6) s'étendent en mode sensiblement asymptotique mutuel.

5. Essieu de véhicule selon la revendication 4, **caractérisé en ce que** la distance entre le profilé en forme de U interne et le profilé en forme de U externe (2, 3) représente au sommet (S) de la section transversale de l'essieu plusieurs fois l'épaisseur de paroi de la bande métallique (1).
